# EUROPÄISCHE PATENTSCHRIFT

(11) **EP 2 226 240 B1**
(45) Veröffentlichungstag und Bekanntmachung des Hinweises auf die Patenterteilung: **06.07.2011**
(21) Anmeldenummer: 10154859.2
(22) Anmeldetag: 26.02.2010
(51) Int. Cl.: B62D 63/06, B62B 3/06

(54) **Trailerzuganhänger**
Trailer
Remorque de ferroutage

(30) Priorität: 03.03.2009 DE 202009001933 U
(43) Veröffentlichungstag der Anmeldung: 08.09.2010
(73) Patentinhaber: LR Intralogistik GmbH, 84079 Bruckberg (DE)
(72) Erfinder: Berghammer, Fritz, 84079, Bruckberg (DE)
(74) Vertreter: Gustorf, Gerhard

(56) Entgegenhaltungen:
- EP-A1- 1 352 815
- DE-A1- 19 958 086
- DE-A1-102007 022 525
- DE-U1- 20 313 955
- FR-A1- 2 850 096
- US-A- 3 861 545
- US-A- 4 515 518

## Beschreibung

Die Erfindung betrifft einen Trailerzuganhänger für einen werksinternen Routenzug nach dem Oberbegriff des Anspruchs 1.

In der maschinellen Serienfertigung von Produkten, beispielsweise von Automobilen, werden die einzelnen Arbeitsstationen häufig über Trailerzüge mit den erforderlichen Bauteilen versorgt. Diese Trailerzüge bestehen aus einem Zugfahrzeug und einer Mehrzahl von Trailerzuganhängem, auf denen die erforderlichen Bauteile transportiert werden. Im allgemeinen sind diese Bauteile auf Paletten oder in Gitterboxen untergebracht, so dass die Abmessungen der Trailerzuganhänger auf die Abmessungen der Paletten oder Gitterboxen abgestimmt sind.

Aus US 4 515 518 A ist ein Trailerzuganhänger bekannt, der die Merkmale des Oberbegriffs des Anspruchs 1 aufweist. Der Tragrahmen hat dabei in Draufsicht die Form eines I mit einem Mittelbalken, an dessen Enden jeweils ein Querträger befestigt ist. Zwischen den beiden Querträgern ist ein mittlerer Querträger vorgesehen, der über Säulen an zwei Längsträgern aufgehängt ist, die sich über der Ebene der beiden Querträger und des Mittelbalkens befinden und zusätzlich über schräges Stützen mit dem Mittelbalken verbunden sind. Auf diese Weise hat der Anhänger eine räumliche, platzgreifende Fachwerkstruktur. Der Mittelbalken begrenzt zusammen mit den beiden Querträgern und dem mittleren Querträger insgesamt vier Ladeöffnungen für vier Container, die zur Aufnahme der Container schienenartige Elemente haben.

Da die Verbindung zwischen dem Mittelbalken, den Querträgern und dem mittleren Querträger fest ist, können nur solche Container aufgenommen werden, deren Abmessungen hinsichtlich Länge und Breite mit den Abmessungen der Aufnahmeöffnungen übereinstimmen.

Aus FR 2 850 096 A1 ist ein Palettentransportgerät bekannt, das in einer ersten Version einen in Draufsicht C-förmigen Tragrahmen hat, der relativ zu dem Fahrwerk vertikal nicht verstellt werden kann. Auf dem Längsträger de C-Gestells ist ein Huborgan fest gelagert, von dem zwei Zinken abstehen. Bei einer zweiten Variante besteht der Tragrahmen aus zwei Rücken an Rücken miteinander verbundenen, C-förmigen Gestellen, auf deren gemeinsamem Längsträger wiederum in einer festen Position das zweizinkige Hubgerät angeordnet ist. Die dritte Variante ist eine Weiterentwicklung der zweiten Variante, bei der auf dem Mittelbalken zwei Hubgeräte ebenfalls in fester Position angeordnet sind.

Gegenstand von DE-C 2007 022 525 A1 ist ein Trailerzuganhänger mit einem in Draufsicht E-förmigen Tragrahmen, von dessen Längsträger zwei äußere Querträger und ein mittlerer Querträger abstehen. Der mittlere Querträger ist mit einem Fahrwerk versehen, das vertikal fest an dem mittleren Querträger angebracht ist. Möglichkeiten zur Verstellung der Ladeöffnung sind nicht vorgesehen.

Der Erfindung liegt die Aufgabe zu Grunde, einen Trailerzuganhänger zur Verfügung zu stellen, der bei flacher Bauweise eine von einer Seite zu beschickende Ladeöffnung hat, die hinsichtlich der Abmessungen der aufzunehmenden Transportgutwagen variabel ist.

Die Lösung dieser Aufgabe ergibt sich aus den kennzeichnenden Merkmalen des Patentanspruchs 1.

Hierbei ist es von Vorteil, wenn die Hubzinken an ihrem Ende, das dem in die Ladeöffnung ragenden, freien Ende gegenüberliegt, einen vertikalen Arm aufweisen, dessen oberes Ende U-förmig abgewinkelt ist und den oberen Führungsrand des Längsträgers manuell verschiebbar umgreift. Zahl und Abstand der einzeln manuell verstellbaren Hubzinken können an die Größe und Zahl der jeweils unterzubringenden Transportgutwagen angepasst werden.

Weitere Merkmale und Vorteile der Erfindung ergeben sich aus den Patentansprüchen und aus der folgenden Beschreibung von zwei Ausführungsbeispielen, die in der Zeichnung dargestellt sind. Es zeigen:
Figur 1 die perspektivische Ansicht eines Trailerzuganhängers gemäß der Erfindung,
Figur 2 den Anhänger der Figur 1 schräg von vom und unten gesehen,
Figur 3 eine Vorderansicht des Anhängers der Figuren 1 und 2,
Figur 4 eine Draufsicht auf den Anhänger mit darauf angeordneten Behältern unterschiedlicher Größe,
Figuren 5 und 6 zwei perspektivische Ansichten einer Variante der Erfindung,
Figur 7 die Draufsicht und
Figur 8 die Unteransicht des Ausführungsbeispiels der Figuren 5 und 6.

Der Trailerzuganhänger 10 gemäß der Erfmdung für einen werksinternen Routenzug hat einen in Draufsicht C-förmigen Tragrahmen 12 mit einem seitlichen Längsträger 14 und zwei rechtwinklig davon abstehenden Querträgern 16. Alle drei Träger sind miteinander verschweißt und bestehen aus einem U-Profil mit einer vertikalen Wand 18, von der ein unterer Schenkel 20 und ein oberer Führungsrand 22 waagrecht nach außen abstehen.

Der C-förmige Tragrahmen 12 bildet auf der dem Längsträger 14 gegenüberliegenden Seite eine Ladeöffnung 24, in die parallel zu den beiden Querträgern 16 verlaufende Hubzinken 26 ragen, deren Länge etwa mit derjenigen der beiden Querträger 16 übereinstimmt. Im ersten Ausführungsbeispiel sind insgesamt vier Hubzinken 26 vorgesehen. Da diese jedoch unabhängig voneinander sind, können je nach Bedarf auch mehr oder weniger Hubzinken 26 eingesetzt werden.

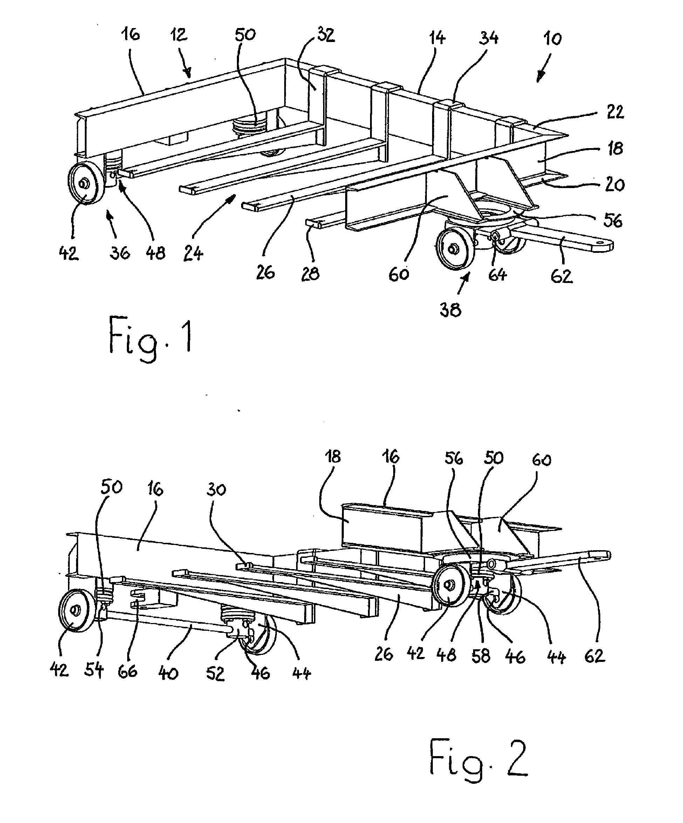

Wie die Figuren 1 und 2 erkennen lassen, haben die Hubzinken 26 an ihrem freien Ende 28 nach oben abstehende Haltevorsprünge 30 zur Sicherung der Ladung.

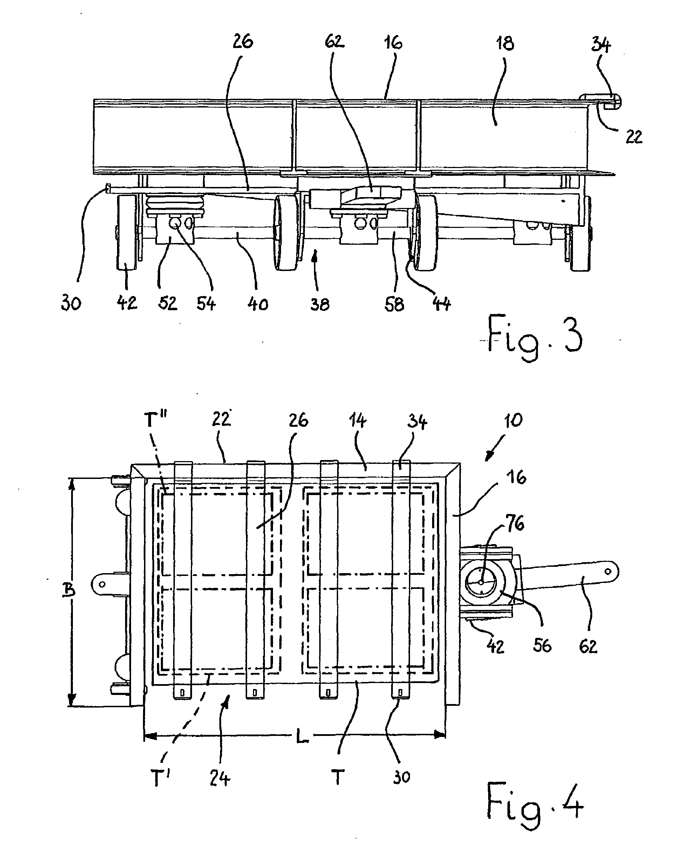

An ihrem dem freien Ende 28 gegenüberliegenden Ende sind die Hubzinken 26 jeweils an einem vertikalen Arm 32 befestigt, dessen oberes Ende, wie Figur 3 zeigt, als U-förmige Abwinklung 34 ausgebildet ist, die den oberen Führungsrand 22 des Längsträgers 14 umgreift. Auf diese Weise können die Hubzinken 26 auf dem Längsträger 14 unabhängig voneinander manuell verschoben werden.

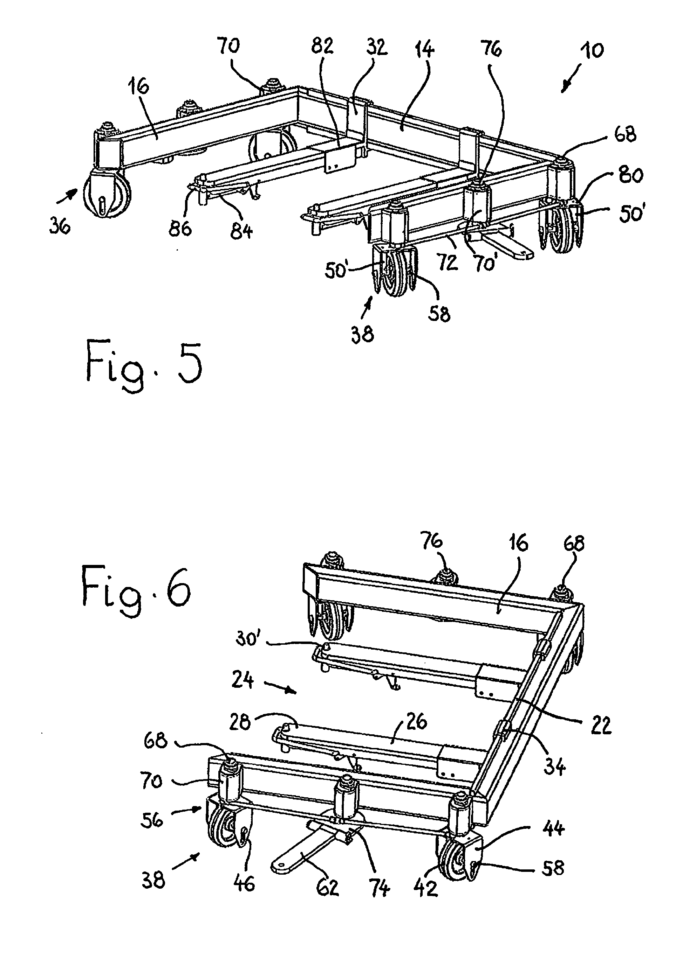

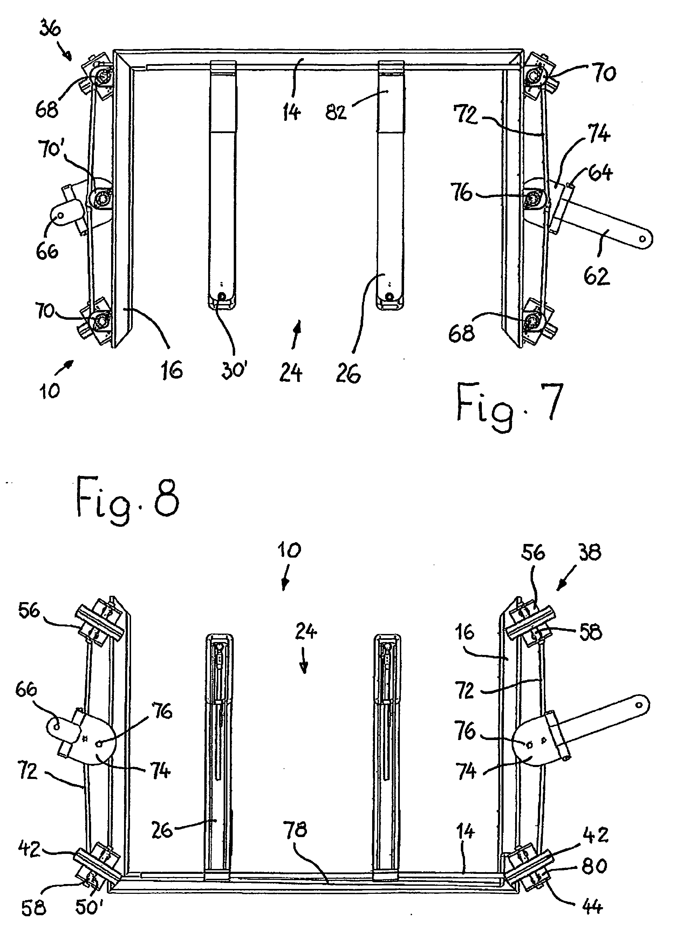

In Abänderung dieser Ausführungsform zeigen die Figuren 5 bis 8 die Möglichkeit, sowohl den Längsträger 14 als auch die Querträger 16 aus einem Kastenprofil herzustellen. In diesem Fall ist an der oberen Seite des Längsträgers 14 ein Führungsrand 22 angeschweißt.

Insbesondere die Figuren 1 und 2 zeigen, dass an dem hinteren Querträger 16 zwei hintere Fahrwerke 36 angebracht sind, während ein vorderes Fahrwerk 38 am vorderen Querträger 16 angebracht ist.

Das hintere Fahrwerk 36 besteht aus einer Starrachse 40 mit zwei daran gelagerten Laufrollen 42. Im Bereich jeder Laufrolle 42 steht von dem hinteren Querträger 16 eine Führungswange 44 nach unten ab, die ein in vertikaler Richtung verlaufendes Langloch 46 für den Durchgriff der Starrachse 40 aufweist (vgl. Figur 2).

Wie das Ausführungsbeispiel der Figuren 1 bis 4 zeigt, stützt sich der hintere Querträger 16 über zwei seitlich angebrachte Huborgane 48 auf der Starrachse 40 ab. Jedes Huborgan 48 besteht aus einem balgartigen Druckstempel 50, der auf einem zylindrischen Tragkörper 52 gehalten ist, welcher seinerseits auf der Starrachse 40 sitzt. Der Tragkörper 52 hat Öffnungen 54 zum Durchführen von pneumatischen oder hydraulischen Versorgungsleitungen für den Druckstempel 50.

In den Figuren 1 bis 3 ist zu erkennen, dass das vordere Fahrwerk 38 aus einem Drehschemel 56 besteht, der eine gemeinsame Achse 58 für zwei vordere Laufrollen 42 hat. Ähnlich wie beim hinteren Fahrwerk 36 sind auch beim vorderen Fahrwerk 38 zwei parallele Führungswangen 44 vorgesehen, die von dem Drehschemel 56 nach unten abstehen und jeweils ein in vertikaler Richtung verlaufendes Langloch 46 für den Durchgriff der Achse 58 haben.

Vor allem Figur 2 zeigt, dass sich der Drehschemel 56 des vorderen Fahrwerks 38 über ein Huborgan 48 auf der Achse 58 abstützt. Auch dieses Huborgan 48 ist als balgförmiger Druckstempel 50 ausgebildet, der sich auf einem zylindrischen Tragkörper 52 abstützt, durch den die Achse 58 hindurchgeführt ist.

Der Drehschemel 56 ist an zwei Kragarmen 60 angebracht, die von dem vorderen Querträger 16 in Fahrtrichtung nach vom abstehen.

An dem Drehschemel 56 ist eine Deichsel 62 befestigt, die über eine waagrechte Achse 64 schwenkbar an dem Drehschemel 56 angelenkt ist. Die Deichsel 62 dient zum Anhängen des Trailerzuganhängers 10 an ein Zugfahrzeug oder an einen vorauslaufenden Anhänger 10 gleicher oder auch anderer Bauart, der zu diesem Zweck ein an sich bekanntes Zugmaul 66 hat, das an dem hinteren Querträger 16 befestigt ist.

Über eine gemeinsame Pneumatik- oder Hydraulikansteuerung können alle drei Huborgane 48 gleichzeitig angesteuert werden, um den gesamten Tragrahmen 12 mit den Hubzinken 26 relativ zu den Achsen 40 und 58 anzuheben bzw. abzusenken; die Langlöcher 46 in den Führungswangen 44 begrenzen dabei den vertikalen Verstellweg. Ein oder mehrere, auf die Hubzinken 26 geschobene Transportgutwagen T (Trolley) können auf diese Weise für den Fahrbetrieb angehoben werden, so dass ihre eigenen Laufrollen nicht auf der Fahrbahn abrollen.

Das vordere Fahrwerk 38 ist im Fahrbetrieb aufgrund des Drehschemels 56 um die Hochachse 76 schwenkbar, wobei gleichzeitig die Deichsel 62 um die waagrechte Achse 64 frei schwenkbar ist, so dass der Routenzug mit einer Mehrzahl derartiger Trailerzuganhänger 10 nicht nur in der Ebene, sondern auch auf Rampen fahrbar ist.

Am Beispiel der Figur 4 ist angedeutet, dass in die Ladeöffnung 24 wahlweise ein Trolley T (Umrisslinien durchgehend), zwei Trolleys T' (Umrisslinien gestrichelt) oder vier Trolleys T" (Umrisslinien strichpunktiert) eingesetzt werden können. Die lichten Maße für die Ladeöffnung 24 sind mit L (z. B. 1850 mm) und B (z. B. 1350 mm) eingezeichnet. In einem solchen Fall kann ein herkömmlicher Trolley T in Form einer Gitterbox mit den Maßen 1200 x 1600 eingeschoben werden. Im Fall von zwei Trolleys T' liegen die Abmessungen bei etwa 800 x 1200, bei vier Trolleys T" in der Größenordnung von 620 x 820 mm.

Bei der in den Figuren 5 bis 8 dargestellten Variante bestehen sowohl das vordere Fahrwerk 38 als auch das hintere Fahrwerk 36 jeweils aus zwei seitlichen Drehschemeln 56, von denen jeder über eine vertikale Achse 68 schwenkbar in einem Lagergehäuse 70 gelagert ist, das an dem jeweiligen Querträger 16 befestigt ist.

Jeder Drehschemel 56 hat, ähnlich wie der vordere Drehschemel 56 im Beispiel der Figur 2, die Querschnittsform eines kopfstehenden U mit zwei parallelen Führungswangen 44, die am oberen Ende durch ein waagrechtes Tragblech 80 miteinander verbunden sind. Die Achse 40 der Laufrolle 42 ist in den beiden Langlöchern 46 der Führungswangen 44 vertikal beweglich. In Figur 5 ist zu erkennen, dass das Huborgan 48 jedes Drehschemels 56 aus zwei Hydraulikzylindern 50' besteht, die sich unten an der Achse 40 und oben an dem Tragblech 80 abstützen.

Die beiden Drehschemel 56 sowohl des vorderen Fahrwerks 38 als auch des hinteren Fahrwerks 36 sind über ein Zwangslenkungsorgan miteinander gekoppelt, das aus einer geteilten Querstange 72 besteht, die exzentrisch zu der vertikalen Achse 68 am jeweiligen Drehschemel 56 angelenkt ist. In ihrer Mitte ist die geteilte Querstange 72 mit einem Zwischendrehschemel 74 gekoppelt; dieser ist, wie die Figuren 5 und 6 zeigen, um die Hochachse 76 schwenkbar im Lagergehäuse 70' gelagert, das in der Mitte des jeweiligen Querträgers 16 befestigt ist.

Der vordere Zwischendrehschemel 74 trägt eine um die waagrechte Achse 64 schwenkbare Deichsel 62, während am hinteren Zwischendrehschemel 74 ein Zugmaul 66 angebracht ist.

Für die Lenkungsübertragung von vom nach hinten ist im Bereich des Längsträgers 14 eine Koppelstange 78 vorgesehen, die außermittig an dem vorderen und hinteren Drehschemel 56 angreift, der auf der Seite des Längsträgers 14 liegt.

Insbesondere die Figuren 5 und 6 zeigen, dass bei diesem Ausführungsbeispiel wenigstens ein Teil der Hubzinken 26 mit einem Auswerferschieber 82 bestückt ist, der über ein Gestänge 84 mechanisch mit einem Haltebolzen 30' am freien Ende 28 des Hubzinkens 26 gekoppelt ist. Beim Aufschieben einer Last T auf die Hubzinken 26 drückt diese die Auswerferschieber 82 gegen den jeweiligen, am Längsträger 14 eingehängten Arm 32, wobei gleichzeitig über das Gestänge 84 die Haltebolzen 30' in ihre obere Sperrstellung ausgerückt werden und die Last T sichern.

Zum Entladen der Last T wird über Fußhebel 86 der jeweiligen Haltebolzen 30' in seine Freigabestellung nach unten gezogen, wobei gleichzeitig über das Gestänge 84 der Auswerferschieber 82 in Richtung auf das freie Ende 28 des jeweiligen Hubzinkens 26 gezogen wird und dabei das Ausschieben der Last T einleitet.

## Patentansprüche

1. Trailerzuganhänger für einen werksinternen Routenzug, umfassend einen Tragrahmen (12) mit vorderem und hinterem Fahrwerk (36, 38) und Elementen zur Aufnahme von Transportgutwagen, wobei der Tragrahmen (12) über Huborgane (48) am vorderen und hinteren Fahrwerk (36, 38) abgestützt ist, **dadurch gekennzeichnet, dass** der in Draufsicht C-förmige Tragrahmen (12) aus einem an einer Seite ausgebildeten Längsträger (14) und zwei rechtwinklig davon abstehenden Querträgern (16) besteht, wobei dem Längsträger (14) auf der anderen Seite eine Ladeöffnung (24) gegenüberliegt, und dass die Elemente zur Aufnahme der Transportgutwagen Hubzinken (26) sind, die parallel zu den Querträger (16) verlaufen und mit einem Ende auf dem Längsträger (14) in Fahrtrichtung einzeln verstellbar angebracht sind.

2. Trailerzuganhänger nach Anspruch 1, **dadurch gekennzeichnet, dass** die Hubzinken (26) an ihrem Ende, das dem in die Ladeöffnung (24) ragenden, freien Ende (28) gegenüberliegt, einen vertikalen Arm (32) aufweisen, dessen oberes Ende U-förmig abgewinkelt (34) ist und einen oberen Führungsrand (22) des Längsträgers (14) manuell verschiebbar umgreift.

3. Trailerzuganhänger nach Anspruch 2, **dadurch gekennzeichnet, dass** wenigstens ein Teil der Hubzinken (26) an ihrem am Längsträger (14) eingehängten Ende einen Auswerferschieber (82) hat, der über ein Gestänge (84) mit einem vertikal verschiebbaren Haltebolzen (30') am freien Ende (28) des Hubzinkens (26) gekoppelt ist.

4. Trailerzuganhänger nach einem der vorhergehenden Ansprüche, **dadurch gekennzeichnet, dass** das hintere Fahrwerk (36) aus einer Starrachse (40) mit zwei Laufrollen (42) besteht, auf der sich der hintere Querträger (16) über zwei seitlich angebrachte Huborgane (48) abstützt.

5. Trailerzuganhänger nach Anspruch 4, **dadurch gekennzeichnet, dass** von dem hinteren Querträger (16) im Bereich jeder Laufrolle (42) eine Führungswange (44) nach unten absteht, die ein in vertikaler Richtung verlaufendes Langloch (46) für den Durchgriff der Starrachse (40) aufweist.

6. Trailerzuganhänger nach einem der vorhergehenden Ansprüche, **dadurch gekennzeichnet, dass** das vordere Fahrwerk (38) aus einem Drehschemel (56) mit einer gemeinsamen Achse (58) für zwei vordere Laufrollen (42) besteht, der sich über ein Huborgan (48) auf der Achse (58) abstützt.

7. Trailerzuganhänger nach Anspruch 6, **dadurch gekennzeichnet, dass** von dem Drehschemel (56) zwei parallele Führungswangen (44) nach unten abstehen, die jeweils ein in vertikaler Richtung verlaufendes Langloch (46) für den Durchgriff der beiden Laufrollen (42) gemeinsamen Achse (58) aufweisen.

8. Trailerzuganhänger nach Anspruch 6 oder 7, **dadurch gekennzeichnet, dass** an dem Drehschemel (56) eine Deichsel (62) über eine waagrechten Achse (64) schwenkbar angelenkt ist.

9. Trailerzuganhänger nach einem der vorhergehenden Ansprüche, **dadurch gekennzeichnet, dass** das vordere Fahrwerk (38) und das hintere Fahrwerk (36) jeweils aus zwei seitlichen Drehschemeln (56) bestehen, die über ein Zwangslenkungsorgan untereinander gekoppelt sind.

10. Trailerzuganhänger nach Anspruch 9, **dadurch gekennzeichnet, dass** das Zwangslenkungsorgan des vorderen und des hinteren Fahrwerks (38, 36) jeweils aus einer geteilten Querstange (72) besteht, die an dem zugehörigen Drehschemel (56) angelenkt und in ihrer Mitte mit einem Zwischendrehschemel (74) gekoppelt ist.

11. Trailerzuganhänger nach Anspruch 10, **dadurch gekennzeichnet, dass** am Zwischendrehschemel (74) des vorderen Fahrwerks (38) eine Deichsel (62) über eine waagrechte Achse (64) schwenkbar angelenkt ist, während am Zwischendrehschemel (74) des hinteren Fahrwerks (36) ein Zugmaul (66) angebracht ist.

12. Trailerzuganhänger nach einem der Ansprüche 9 bis 11, **dadurch gekennzeichnet, dass** im Bereich des seitlichen Längsträgers (14) ein Übertragungsorgan (78) angeordnet ist, das einen Drehschemel (56) des vorderen Fahrwerks (38) mit einem Drehschemel (56) des hinteren Fahrwerks (36) zur Lenkungsübertragung koppelt.

13. Trailerzuganhänger nach einem der vorhergehenden Ansprüche, **dadurch gekennzeichnet, dass** die Huborgane (48) über eine gemeinsamen Pneumatik- oder Hydraulikansteuerung miteinander verbunden sind.

## Claims

1. Trailer for a tugger train travelling in a factory, said trailer comprising a frame (12) provided with a front and a rear bogie (36, 38) and with means to hold carriages, said frame (12) being supported by the front and the rear bogie (36, 38) through lifting elements (48), **characterized in that** said frame (12) having a C-shaped plan view is made up of a lateral longitudinal beam (14) and of two crossmembers (16) protruding at right angles from said longitudinal beam (14) on the opposite side of which a receiving aperture (24) is provided, and **in that** said means to hold the carriages are in the form of lifting arms (26) running parallel to said crossmembers (16), each being adjustably mounted in the longitudinal sense through one end portion on said longitudinal beam (14).

2. Trailer according to claim 1, wherein said lifting arms (26) comprise, at their end portions opposite to their free ends (28) projecting into the receiving aperture (24), a vertical bracket (32) the upper end of which having a U-bent shape (34) is embracing the upper guiding rim (22) of the longitudinal beam (14) such that it may be manually shifted.

3. Trailer according to claim 2, wherein at least a portion of said lifting arms (26) is provided, at the end portion embracing the longitudinal beam (14), with a sliding ejector (82) coupled through a rod linkage (84) with a vertically movable retaining bolt (30') provided on the free end (28) of said lifting arm (26).

4. Trailer according to any of the preceding claims, wherein the rear bogie (36) comprises a rigid axle (40) with two wheels (42), the rear crossmember (16) being supported on said axle (40) through two laterally mounted lifting elements (48).

5. Trailer according to claim 4, wherein said rear crossmember (16) near each wheel (42) is provided with a downward protruding guiding plate (44) having a vertically elongated hole (46) for the passage of said rigid axle (40).

6. Trailer according to any of the preceding claims, wherein the front bogie (38) comprises a swivelling bolster (56) provided with one common axle (58) for two front wheels (42), said swivelling bolster (56) being supported on said axle (58) through a lifting element (48).

7. Trailer according to claim 6, wherein said swivelling bolster (56) has two parallel and downward protruding guiding plates (44), each one of which being provided with a vertically elongated hole (46) for the passage of said axle (58) common to both wheels (42).

8. Trailer according to claim 6 or 7, wherein a drawbar (62) is pivotally linked to said swivelling bolster (56) by means of a horizontal axis (64).

9. Trailer according to any of the preceding claims, wherein the front and the rear bogie (38, 36) are both made up of two lateral swivelling bolsters (56) interconnected by means of a positive steering device.

10. Trailer according to claim 9, wherein said positive steering device of the front and the rear bogie (38, 36) comprises for each of said bogies (38, 36) a transverse split rod (72) linked to the corresponding swivelling bolster (56) and coupled in its centre with an intermediate swivelling bolster (74).

11. Trailer according to claim 10, wherein a drawbar (62) is pivotally linked to the intermediate swivelling bolster (74) of the front bogie (38) by means of a horizontal axis (64), whereas to the intermediate swivelling bolster (74) of the rear bogie (36) is fixed a drawbar chuck (66).

12. Trailer according to any of the preceding claims 9 to 11, wherein near the lateral longitudinal beam (14) a steering transmission element (78) is located that couples one of the swivelling bolsters (56) of the front bogie (38) with a swivelling bolster (56) of the rear bogie (36).

13. Trailer according to any of the preceding claims, wherein said lifting elements (48) are interconnected by means of a common pneumatic or hydraulic drive system.

## Revendications

1. Remorque de ferroutage pour un train de convoyage dans l'usine, comprenant un châssis (12) avec bogie antérieur et postérieur (36, 38) et avec des éléments pour recevoir des chariots de marchandise, ledit châssis (12) étant supporté par les bogies antérieur et postérieur (36, 38), **caractérisée par le fait que** le châssis (12) en forme de C en élévation se compose d'un longeron (14) sur un côté et de deux traverses (16) s'étendant perpendiculairement audit longeron, à l'opposé duquel se trouve une ouverture de chargement (24), et **par le fait que** lesdits éléments de réception des chariots de marchandise sont en forme de dents d'élévation (26) s'étendant parallèlement aux traverses (16) et dont une extrémité est montée sur le longeron (14) de façon réglable dans le sens de la marche.

2. Remorque de ferroutage selon la revendication 1, **caractérisée par le fait que** l'extrémité des dents d'élévation (26) opposée à l'extrémité libre s'étendant dans l'ouverture de chargement (24) présente un bras vertical (32) dont l'extrémité supérieure est recourbée en forme de U (34) et s'accroche sur le bord supérieur de guidage (22) du longeron (14) de façon manuellement déplaçable.

3. Remorque de ferroutage selon la revendication 2, **caractérisée par le fait qu'**au moins une partie des dents d'élévation (26) est munie d'un éjecteur (82) se trouvant à l'extrémité accrochée sur le longeron (14) et accouplé par une tringlerie (84) à une goupille de retenue (30') verticalement déplaçable et montée à l'extrémité libre (28) de la dent d'élévation (26).

4. Remorque de ferroutage selon une des revendications précédentes, **caractérisée par le fait que** le bogie postérieur (36) est formé d'un essieu rigide (40) à deux roues (42) sur lequel s'appuie la traverse postérieure (16) au moyen de deux vérins montés latéralement (48).

5. Remorque de ferroutage selon la revendication 4, **caractérisée par le fait que** dans la zone des roues (42) s'étend de la traverse (16) vers le bas une joue de guidage (44) dans laquelle est pratiqué un trou long vertical (46) dans lequel passe l'essieu rigide (40).

6. Remorque de ferroutage selon une des revendications précédentes, **caractérisée par le fait que** le bogie antérieur (38) est constitué par une sellette orientable (56) à deux roues antérieures (42) à essieu commun (58), ladite sellette s'appuyant sur l'essieu (58) par un vérin (48) .

7. Remorque de ferroutage selon la revendication 6, **caractérisée par le fait que** de la sellette (56) s'étendent vers le bas deux joues de guidage parallèles (44) possédant chacune un trou long vertical (46) dans lequel passe l'essieu commun (58) des deux roues (42).

8. Remorque de ferroutage selon la revendication 6 ou 7, **caractérisée par le fait qu'**un timon (62) est articulé sur la sellette (56) par un axe horizontal (64).

9. Remorque de ferroutage selon une des revendications précédentes, **caractérisée par le fait que** les bogies antérieur et postérieur (36, 38) sont chacun en forme de deux sellettes latérales (56) reliées entre elles par un organe de direction forcée.

10. Remorque de ferroutage selon la revendication 9, **caractérisée par le fait que** l'organe de direction forcée des bogies antérieur et postérieur (36, 38) est formé pour chacun d'eux d'une tige séparée (72) articulée sur la sellette correspondante (56) et accouplée dans leur centre à une sellette intermédiaire (74).

11. Remorque de ferroutage selon la revendication 10, **caractérisée par le fait qu'**une tige (62) est articulée sur un axe horizontal (64) à la sellette intermédiaire (74) du bogie antérieur (38) tandis que la sellette intermédiaire (74) du bogie postérieur (36) est munie d'une mâchoire de traction (66).

12. Remorque de ferroutage selon une des revendications 9 à 11, **caractérisée par le fait que** dans la zone du longeron latéral (14) est prévu un organe d'accouplement (78) reliant, pour la transmission de la direction, une sellette (56) du bogie antérieur (38) à une sellette (56) du bogie postérieur (36).

13. Remorque de ferroutage selon une des revendications précédentes, **caractérisée par le fait que** les vérins (48) sont reliés entre eux par un mécanisme commun de commande pneumatique ou hydraulique.
